# EUROPÄISCHE PATENTSCHRIFT

(11) **EP 2 097 616 B1**
(45) Veröffentlichungstag und Bekanntmachung des Hinweises auf die Patenterteilung: **20.04.2011**
(21) Anmeldenummer: 07821966.4
(22) Anmeldetag: 29.10.2007
(51) Int. Cl.: F01D 5/14, F01D 25/08, F23R 3/00

(54) **BAUTEIL MIT SCHRÄG VERLAUFENDEN VERTIEFUNGEN IN DER OBERFLÄCHE UND VERFAHREN ZUM BETREIBEN EINER TURBINE**
COMPONENT WITH DIAGONALLY EXTENDING RECESSES IN THE SURFACE AND METHOD FOR OPERATING A TURBINE
ÉLÉMENT STRUCTUREL AYANT DANS SA SURFACE DES ÉVIDEMENTS S'ÉTENDANT EN OBLIQUE, ET PROCÉDÉ D'EXPLOITATION D'UNE TURBINE

(30) Priorität: 05.01.2007 EP 07000189
(43) Veröffentlichungstag der Anmeldung: 09.09.2009
(73) Patentinhaber: Siemens Aktiengesellschaft, 80333 München (DE)
(72) Erfinder: FISCHER, Marcus, 15468 Mühlheim an der Ruhr (DE)
(86) Internationale Anmeldenummer: PCT/EP2007/061609
(87) Internationale Veröffentlichungsnummer: WO 2008/080655

(56) Entgegenhaltungen:
- EP-A- 1 302 628
- EP-A2- 0 227 578
- EP-A2- 1 043 479
- WO-A-02/32614
- GB-A- 2 052 644
- GB-A- 2 244 673
- US-A- 5 233 828
- US-B2- 6 703 137

## Beschreibung

Die Erfindung betrifft ein Bauteil, das an der Oberfläche schräg verlaufende Vertiefungen aufweist und ein Verfahren zum Betreiben einer Turbine.

Bauteile, die von einem Medium über- oder umströmt werden, wie z.B. Strömungskraftmaschinen, beispielsweise Gasturbinen, dürfen im Einsatz bestimmte Temperaturen nicht überschreiten und müssen vor zu hohem Wärmeintrag geschützt werden und/oder gekühlt werden.
Bei Gasturbinen erfolgt dies durch Aufbringen von keramischen Wärmedämmschichten, die insbesondere porös ausgeführt sind. Neben der Verwendung von porösen Wärmedämmschichten ist auch die Filmkühlung bei Gasturbinenschaufeln bekannt.

Die US 6,703,137 B2 offenbart senkrecht zur Oberfläche verlaufende Vertiefungen in einer Turbinenschaufel, die eine äußere Wärmedämmschicht auf einer Haftvermittlungsschicht aufweist.

Es ist daher Aufgabe der Erfindung ein Bauteil aufzuzeigen, das besser wärmeisoliert ist und ein Verfahren zum Betreiben einer Turbine anzugeben, das zum geringeren Kühlbedarf von Bauteilen führt.

Die Aufgabe wird gelöst durch ein Bauteil, das zur Strömungsrichtung schräg verlaufende Vertiefungen aufweist und durch ein Verfahren zum Betreiben einer Turbine mit solchen Bauteilen.

Vorzugsweise erstrecken sich die Vertiefungen nur in einer Schicht, d. h. sind vorzugsweise innerhalb einer Schicht vorhanden.

Wenn mehrere, hier vorzugsweise zwei, Schichten vorhanden sind, sind die Vertiefungen dann nur in der äußersten Schicht vorhanden. In dem Beispiel von Turbinenschaufeln für Gasturbinen ist die äußerste Schicht eine keramische Schicht, in der die Vertiefungen vorhanden sind.

In den Unteransprüchen sind weitere vorteilhafte Maßnahmen aufgelistet, die untereinander beliebig miteinander kombiniert werden können, um weitere Vorteile zu erzielen.

Es zeigen
- Figur 1,2,3,4,5,6: Ausführungsbeispiele,
- Figur 7: eine Gasturbine,
- Figur 8: perspektivisch eine Turbinenschaufel und
- Figur 9: perspektivisch eine Brennkammer.

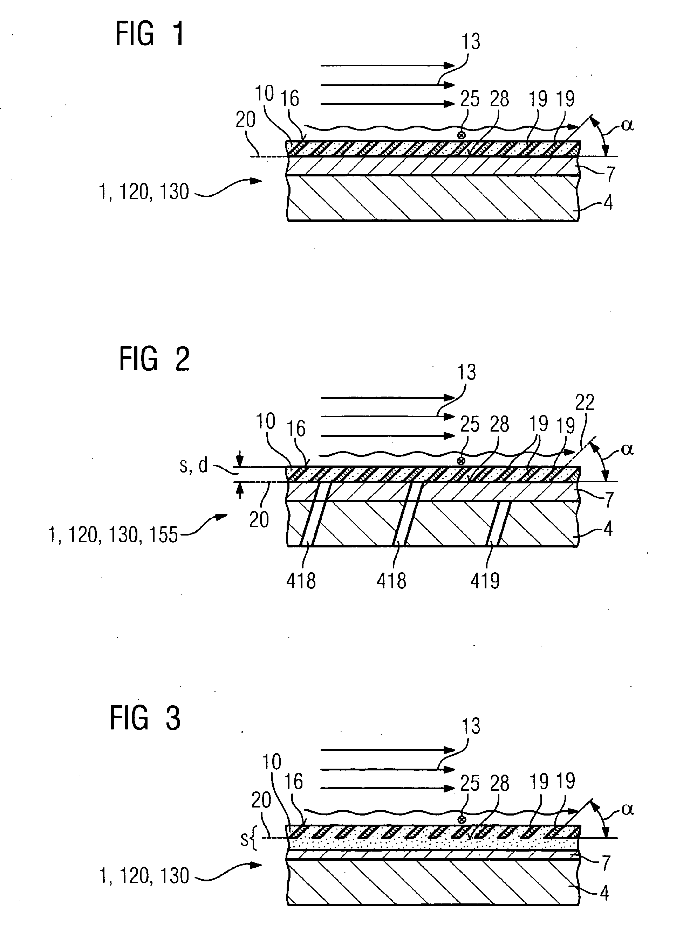

In Figur 1 ist ein Bauteil 1 im Querschnitt dargestellt.

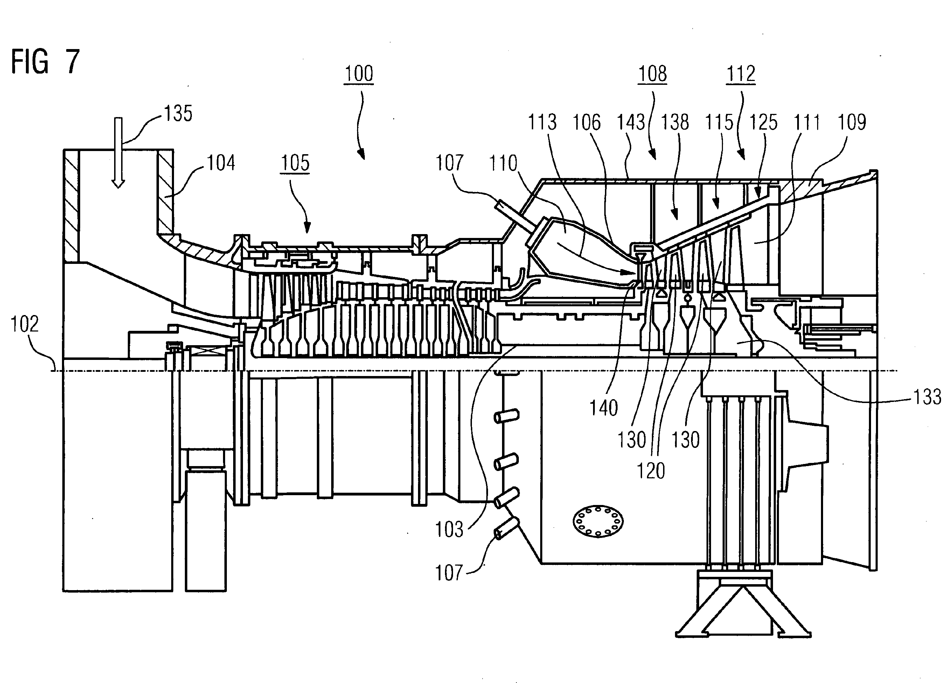

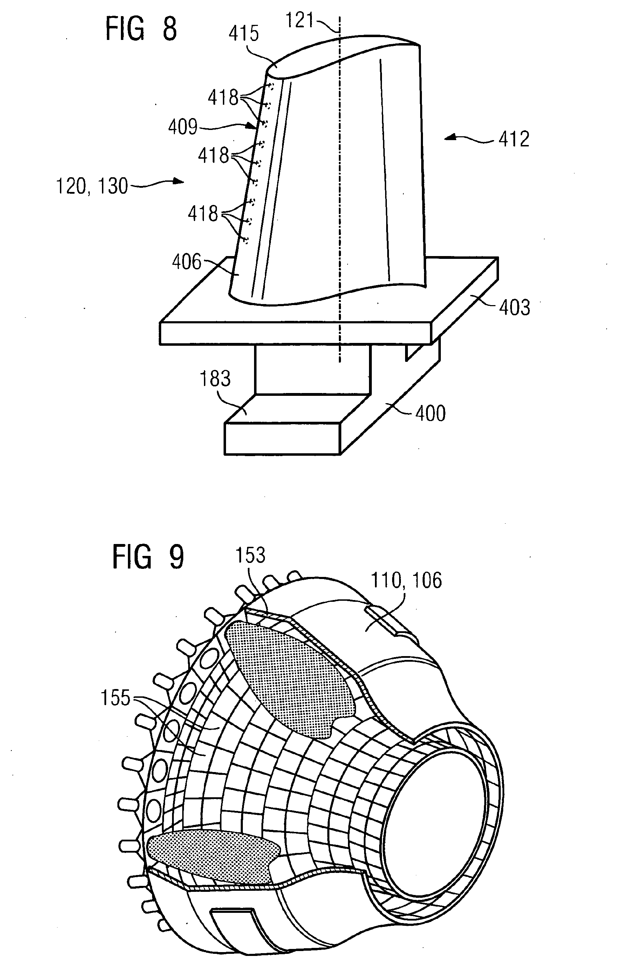

Das Bauteil 1 ist insbesondere bei Gasturbinen 100 (Fig. 7) eine Turbinenlauf- oder Leitschaufel 120, 130 (Fig. 7, 8) oder ein Brennkammerelement 155 (Fig. 9).

Die Erfindung wird nur beispielhaft anhand von Turbinenschaufeln 120, 130 von Gasturbinen 100 erläutert, jedoch kann sie für jedes beliebige Bauteil, das über- oder umströmt wird, angewendet werden, also auch in Gasturbinen für Flugzeuge oder in Dampfturbinen oder Verdichtern.

Das Bauteil 1, 120, 130, 155 besteht insbesondere aus einem Substrat 4, das insbesondere bei Hochtemperaturanwendungen, wie in Gasturbinen, aus einer nickel- oder kobaltbasierenden Legierung besteht. Bei Dampfturbinenbauteilen werden auch eisenbasierte Superlegierungen verwendet.

Auf dem Substrat 4 ist vorzugsweise eine Haftvermittlerschicht 7 vorzugsweise aus einer Legierung MCrAlX vorhanden, auf der eine äußere keramische Wärmedämmschicht 10 aufgebracht ist.

Die Vertiefungen 19 gehen von einer Oberfläche 16 des Bauteils 120, 130, 155 aus und können in einem massiven Bauteil 120, 130, 155 (Bauteil, das nur aus einem Substrat 4 besteht) oder in Schichten 7, 10 (Fig. 1, 2, 3) vorhanden sein. Die Vertiefungen 19 können sich auch durch eine oder mehrere Schichten 7, 10 erstrecken (nicht dargestellt).

Das Bauteil 1 wird von einem Medium in Strömungsrichtung 13 über- oder umströmt. Vorzugsweise verlaufen die Vertiefungen 19 schräg in Richtung der Strömungsrichtung 13 (Fig. 1, 2, 3). Ebenso können sie aber auch schräg entgegen der Strömungsrichtung 13 verlaufen.

Die Vertiefung 19 stellt ein Sackloch dar bzw. weist immer einen Boden 28 auf. Es dient somit nicht als Filmkühlloch.

Die Vertiefungen 19 weisen eine Längsrichtung 22 auf, die innerhalb der Vertiefung 19 vom Boden 28 der Vertiefung 19 bis zur Oberfläche 16 des Bauteils und die um einen Winkel α schräg zur Strömungsrichtung 13 oder zur Oberfläche 16 verläuft (Fig. 2).

Die Eindringtiefe d einer Vertiefung 19 verläuft senkrecht zur Oberfläche 16 des Bauteils 120, 130 und kann in relativen Werten von der Schichtdicke s der einzelnen Schichten 7, 10 und der Gesamtschichtdicke bemessen werden.

Eine Eindringtiefe d der Vertiefung in die eine Schicht 10 oder die Schichten 7, 10 ist vorzugsweise definiert in relativen Werten zu der Schichtdicke s der äußersten Schicht. Die Eindringtiefe verläuft senkrecht zur äußeren Oberfläche 16. Sie beträgt vorzugsweise 10% - 120% der Schichtdicke s, d.h. beim Wert von 120% geht sie über die äußere Schicht10 in das Substrat 4 oder eine unterliegende und/oder unterliegende Schicht 7 und in das Substrat 4 hinein.

Vorzugsweise beträgt die Eindringtiefe d zwischen 10% und 90% der Schichtdicke s der äußersten Schicht 10, d.h. sie ist nur innerhalb der äußersten Schicht 10 angeordnet. Besonders vorzugsweise werden Eindringtiefen von 50% - 80% der Schichtdicke der äußersten Schicht 10 verwendet (Fig. 3).
Die äußerste Schicht 10 ist vorzugsweise 1 - 2 mm dick und hat für die Vertiefung 19 eine Eindringtiefe d von 1 mm.

Vorzugsweise weisen die Vertiefungen 19 dieselbe Eindringtiefe d (Fig. 2) von der Oberfläche 16 des Bauteils auf. Eine Eindringtiefe d beträgt vorzugsweise 10% bis 120% der Schichtdicke s.

Der Winkel α ist wie folgt : α > 95° oder α < 85°. Der Abstand zu 90 ist somit so gewählt, dass er außerhalb eines Toleranzbereiches liegt, der bei der Herstellung von senkrecht verlaufenden Vertiefungen, wie aus der US 6,703,137 B2 bekannt, gegeben ist.

Vorzugsweise ist der Winkel α < 80° oder weist einen Winkel > 100° auf.
Vorzugsweise beträgt der Winkel α zwischen 20° und 80°.

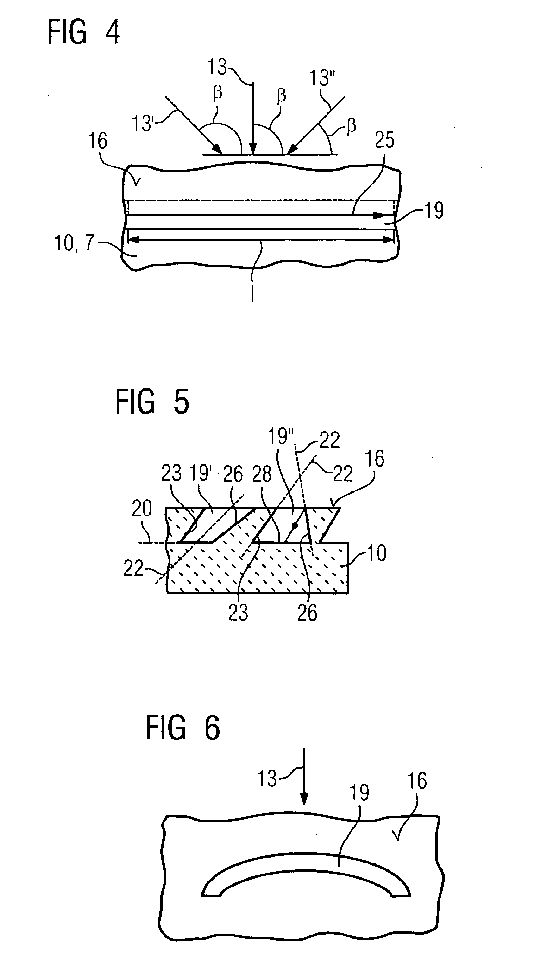

Die Vertiefung 19 wird vorzugsweise in der Ebene der Oberfläche 16 des Bauteils 1, 120, 130, 155 länglich ausgebildet, d. h. die Ausdehnung 1 in der Ebene der Oberfläche 16 beträgt vorzugsweise mindestens das Zehnfache der Eindringtiefe d (Figur 3, 4).
Ebenso kann die Vertiefung 19 gebogen sein (Fig. 4).
Die Vertiefung 19 kann auch um ein Bauteil 120, 130, 155 umlaufend vorhanden sein, also bei einer Turbinenschaufel 120, 130 um das Schaufelblatt 406 herum.

Die Vertiefung 19 kann unter einem Winkel von β = 90° kleiner oder größer 90°, überströmt werden (Fig. 3, 5): 0<β<180, insbesondere 10°<β<170°. Der Winkel β ist definiert durch die Strömungsrichtung 13 und einer Querrichtung 25, die eine Kante der Vertiefung 19 auf Höhe der Oberfläche 16 darstellt.

Figur 2 zeigt ein weiteres Ausführungsbeispiel.
Ausgehend von Figur 1 sind in dem Substrat 4 und/oder auch in den Schichten 7, 10 Filmkühllöcher 418, 419 vorhanden. Die Filmkühllöcher 418 erstrecken sich von einem Hohlraum des Bauteils vorzugsweise bis zur Höhe der Eindringtiefe d der Vertiefungen 19.
Ebenso können sich die Filmkühllöcher 418 bis zur Oberfläche 16 erstrecken (nicht dargestellt), dort wo Vertiefungen 19 sind oder auch dort wo keine Vertiefungen 19 sind.
Ebenso können verdeckte Filmkühllöcher 419 vorhanden sein, die unterhalb der Wärmedämmschicht 10 und unterhalb der Anbindungsschicht 7 vorhanden sind.

Die Breite des Filmkühllochs 418 kann so breit sein wie die Vertiefung auf Höhe der Ebene 20, kann dünner aber auch breiter als die Ausdehnung der Vertiefung 19 in Strömungsrichtung 13 sein.

Der Querschnitt der Vertiefung kann beliebig ausgebildet sein.
In Figur 1, 2 weisen sie die Form eines Parallelogramms auf. Im Querschnitt parallel zur Oberfläche 16 weisen die Kanten der Vertiefung 19 im Querschnitt parallel verlaufende Kanten auf.

Ebenso kann die Breite der Vertiefung 19 im Bereich der Oberfläche 16 breiter ausgebildet sein als im Bereich des Bodens 28 der Vertiefung 19 (Fig. 4).

Ebenso kann die Breite der Vertiefung 19" auf der Oberfläche 16 kleiner sein als am Boden 28 auf Höhe der Eindringtiefe d.

Die Längsrichtung 22 wird immer durch eine Linie gebildet, die in der Ebene einer Seitenwand 23, 26 verläuft und den kleinsten Abstand vom Boden 28 der Vertiefung 19 zur Oberfläche 16 der Vertiefung 19 aufweist.

Die Vertiefungen 19 können auf verschiedene Art und Weise eingebracht werden. Bei metallischen Schichten 7 oder metallischen Substraten 4 kann dies auf bekannte Art und Weise mechanischer Art und Weise erfolgen. Bei Keramiken und unter keramischen Schichten 10 erfolgt dies vorzugsweise durch einen Laser, wie es auch in der US 6,703,137 B2 erläutert ist, oder durch Elektronenbestrahlung.

Die Wirkung der Vertiefungen 19 besteht darin, dass sich die Luftmoleküle nicht bewegen und so eine Art offene Porosität bilden, wobei durch die Schrägstellung in Strömungsrichtung 13 die Luft in den Vertiefungen oder Schlitzen 19 verbleibt.

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 8 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Bauteil (120, 130, 155) für eine Strömungsmaschine (100),
das in einer Strömungsrichtung (13) überströmt wird und
das eine äußere Oberfläche (16) aufweist,
in der (16) mehrere,
nicht vollständig durch eine Wand des Bauteils (120, 130, 155) verlaufende Vertiefungen (19) mit einem Boden (28) und nur innerhalb von Schichten (7, 10) auf dem Bauteil vorhanden sind, **dadurch gekennzeichnet, dass** das Bauteil mit einer Längsrichtung (22) der Vertiefung (19),
die vom Boden (28) der Vertiefung (19) bis zur Oberfläche (16) innerhalb der Vertiefung (19) verläuft,
die (22) unter einem Winkel α zur Oberfläche (16) verläuft,
die (22) einen Winkel α < 85° oder einen Winkel α > 95°,
mit der äußeren Oberfläche (16) bildet.

2. Bauteil nach Anspruch 1,
bei dem die Vertiefungen (19) in Strömungsrichtung (13) verlaufen (α < 85°) , insbesondere beträgt α < 80°.

3. Bauteil nach Anspruch 1,
bei dem die Vertiefungen (19) entgegen der Strömungsrichtung (13) verlaufen (α > 95°), insbesondere beträgt α > 100°.

4. Bauteil nach Anspruch 1,
bei dem die Vertiefungen (19) nur in der äußersten Schicht (10) auf dem Bauteil (1, 120, 130, 155) vorhanden sind.

5. Bauteil nach Anspruch 1 oder 4,
bei dem die Vertiefungen (19) in einer keramischen Schicht (10) auf dem Bauteil (120, 130, 155) vorhanden sind.

6. Bauteil nach einem oder mehreren der vorhergehenden Ansprüchen,
bei dem die Vertiefungen (19) in der Ebene der Oberfläche (16) quer zur Strömungsrichtung (13) länglich ausgebildet sind.

7. Bauteil nach Anspruch 1, 4 oder 5,
bei dem die Eindringtiefe (d) der Vertiefung (19) senkrecht zur Oberfläche (16) 10% bis 120% der Schichtdicke (s) der äußersten Schicht (10) beträgt.

8. Bauteil nach Anspruch 7,
bei dem die Eindringtiefe (d) zwischen 10% und 90% der Schichtdicke (s) der äußersten Schicht (10) beträgt.

9. Bauteil nach Anspruch 7,
bei dem die Eindringtiefe (d) 50% bis 80% der Schichtdicke (s) der äußersten Schicht (10) beträgt.

10. Bauteil nach einem oder mehreren der vorherigen Ansprüche,
bei dem die Vertiefung (19) im Querschnitt parallel zur Senkrechten auf der Oberfläche (16) parallel verlaufende Kanten aufweist,
insbesondere ein Parallelogramm darstellt.

11. Bauteil nach Anspruch 1, 3, 4 oder 5,
bei dem das Bauteil (120, 130, 155) Kühllöcher (418, 419) im Bereich der Oberfläche (16) mit Vertiefungen (19) aufweist.

12. Bauteil nach einem oder mehreren der vorhergehenden Ansprüche,
ausgebildet als Turbinenbauteil (120, 130, 155), insbesondere als Turbinenleit- oder Laufschaufel (120, 130) einer Gasturbine (100).

13. Verfahren zum Betreiben einer Turbine (100),
in der Turbinenbauteile (120, 130, 155) nach einem oder mehreren der Ansprüche 1 bis 12,
bei dem ein Medium die Turbinenbauteile (120, 130, 155) in Strömungsrichtung (13) überströmt.

## Claims

1. Component (120, 130, 155) for a turbomachine (100),
said component having a medium flowing over it in a direction of flow (13) and having an outer surface (16), which surface (16) contains a plurality of recesses (19) which have a base (28) and are present only within layers (7, 10) on the component and do not completely extend through a wall of the component (120, 130, 155), **characterized in that** the component with a longitudinal direction (22) of the recess (19),
which direction extends from the base (28) of the recess (19) as far as the surface (16) within the recess (19), which direction (22) extends at an angle α with respect to the surface (16),
and which direction (22) forms an angle α < 85° or an angle α > 95°, with the outer surface (16).

2. Component according to Claim 1,
in which the recesses (19) extend in the direction of flow (13) (α < 85°), in particular α being < 80°.

3. Component according to Claim 1,
in which the recesses (19) extend counter to the direction of flow (13) (α > 95°), in particular α being > 100°.

4. Component according to Claim 1,
in which the recesses (19) are present only in the outermost layer (10) on the component (1, 120, 130, 155).

5. Component according to Claim 1 or 4,
in which the recesses (19) are present in a ceramic layer (10) on the component (120, 130, 155).

6. Component according to one or more of the preceding claims,
in which the recesses (19) are of elongated form in the plane of the surface (16) transverse with respect to the direction of flow (13).

7. Component according to Claim 1, 4 or 5,
in which the penetration depth (d) of the recess (19) perpendicular with respect to the surface (16) is from 10% to 120% of the layer thickness (s) of the outermost layer (10).

8. Component according to Claim 7,
in which the penetration depth (d) is between 10% and 90% of the layer thickness (s) of the outermost layer (10).

9. Component according to Claim 7,
in which the penetration depth (d) is from 50% to 80% of the layer thickness (s) of the outermost layer (10).

10. Component according to one or more of the preceding claims,
in which, in cross section parallel to the perpendicular to the surface (16), the recess (19) has edges extending in parallel,
in particular represents a parallelogram.

11. Component according to Claim 1, 3, 4 or 5,
in which the component (120, 130, 155) has cooling holes (418, 419) in the region of the surface (16) with recesses (19).

12. Component according to one or more of the preceding claims,
in the form of a turbine component (120, 130, 155),
in particular in the form of a turbine guide vane or rotor blade (120, 130) of a gas turbine (100).

13. Process for operating a turbine (100)
comprising turbine components (120, 130, 155) according to one or more of claims 1 to 12,
in which a medium flows over the turbine components (120, 130, 155) in the direction of flow (13).

## Revendications

1. Elément ( 120, 130, 155 ) pour une turbomachine ( 100 ), sur lequel passe un courant dans une direction ( 13 ) d'écoulement et qui a une surface ( 16 ) extérieure,
dans laquelle il y a plusieurs,
cavités ( 19 qui ne s'étendent pas entièrement à travers une paroi de l'élément ( 120, 130, 155 ), qui ont un fond ( 28 ) et qui ne sont présentes qu'au sein de couches ( 7, 10 ) sur l'élément, **caractérisé en ce que** l'élément a une direction ( 22 ) longitudinale de la cavité, qui s'étend du fond ( 28 ) de la cavité ( 19 ) jusqu'à la surface ( 16 ) à l'intérieur de la cavité ( 19 ),
direction ( 22 ) qui fait un angle α avec la surface ( 16 ), direction ( 22 ) qui fait un angle α < 85° ou un angle α > 95° avec la surface ( 16 ) extérieure.

2. Elément suivant la revendication 1,
dans lequel les cavités ( 19 ) s'étendent dans la direction ( 13 ) de l'écoulement ( α < 85° ), α étant notamment < 80°.

3. Elément suivant la revendication 1,
dans lequel les cavités ( 19 ) s'étendent dans le sens contraire à la direction ( 13 ) d'écoulement ( α > 95°) notamment α > 100°.

4. Elément suivant la revendication 1,
dans lequel les cavités ( 19 ) ne sont présentes que dans la couche ( 10 ) la plus extérieure sur l'élément ( 1, 120, 130, 155 ).

5. Elément suivant la revendication 1 ou 4,
dans lequel les cavités ( 19 ) sont présentes dans une couche ( 10 ) en céramique sur l'élément ( 120, 130, 155 ).

6. Elément suivant l'une ou plusieurs des revendications précédentes, dans lequel les cavités ( 19 ) sont formées de manière oblongue dans le plan de la surface ( 16 ) transversalement à la direction ( 13 ) d'écoulement.

7. Elément suivant la revendication 1, 4 ou 5,
dans lequel la profondeur ( d ) de pénétration de la cavité ( 19 ) perpendiculairement à la surface ( 16 ) représente de 10% à 120% de l'épaisseur ( s ) de la couche ( 10 ) la plus à l'extérieur.

8. Elément suivant la revendication 7,
dans lequel la profondeur ( d ) de pénétration représente entre 10% et 90% de l'épaisseur ( s ) de la couche ( 10 ) la plus à l'extérieur.

9. Elément suivant la revendication 7,
dans lequel la profondeur ( d ) de pénétration représente de 50% à 80% de l'épaisseur ( s ) de la couche ( 10 ) la plus à l'extérieur.

10. Elément suivant l'une ou plusieurs des revendications précédentes, dans lequel la cavité ( 19 ) a des bords parallèles s'étendant en coupe transversale parallèlement à des perpendiculaires à la surface ( 16 ),
en représentant notamment un parallélogramme.

11. Elément suivant la revendication 1,4 ou 5,
dans lequel l'élément ( 120, 130, 155 ) a des trous ( 418, 419 ) de refroidissement dans la partie de la surface ( 16 ) ayant des cavités ( 19 ).

12. Elément suivant l'une ou plusieurs des revendications précédentes,
constitué en élément ( 120, 130, 155 ) de turbine,
notamment en aube ( 120, 130 ) directrice ou mobile d'une turbine ( 100 ) à gaz.

13. Procédé pour faire fonctionner une turbine ( 100 ),
dans lequel il y a des éléments ( 120, 130, 155 ) de turbine suivant l'une ou plusieurs des revendications 1 à 12,
dans lequel on fait passer un milieu dans la direction ( 13 ) d'écoulement sur les éléments ( 120, 130, 155 ) de turbine.
